Europäisches Patentamt

European Patent Office

Office européen des brevets

(19)

(11) Numéro de publication: **0 284 866**
**B1**

(12) **FASCICULE DE BREVET EUROPEEN**

(45) Date de publication du fascicule du brevet:
**14.11.90**

(51) Int. Cl.⁵: **F16N 7/38**, F16N 13/16

(21) Numéro de dépôt: **88104003.4**

(22) Date de dépôt: **14.03.88**

(54) Alimentation pour graissage centralisé.

(30) Priorité: **25.03.87 FR 8704175**

(43) Date de publication de la demande:
**05.10.88 Bulletin 88/40**

(45) Mention de la délivrance du brevet:
**14.11.90 Bulletin 90/46**

(84) Etats contractants désignés:
**BE CH DE ES FR GB IT LI LU NL SE**

(56) Documents cités:
**EP-A- 0 247 398**
**FR-E- 8 944**
**GB-A- 2 153 570**
**US-A- 1 970 591**
**US-A- 2 206 335**
**US-A- 2 328 812**
**US-A- 2 498 407**
**US-A- 3 985 205**

(73) Titulaire: **CONSORTIUM DE RECHERCHES POUR L'APPLICATION DES FLUIDES, CRAF, Les Clos des 4 Vents, F-49650 Brain sur Allonnes(FR)**

(72) Inventeur: **Javelly, Christian, Le Moulin de la Motte, F-49650 Allonnes(FR)**
Inventeur: **Paris, René 8, Chemin du Bois Brard, Saint-Hillaire Saint-Florent, F-49400 Saumur(FR)**

(74) Mandataire: **Casalonga, Axel et al, BUREAU D.A. CASALONGA - JOSSE Morassistrasse 8, D-8000 München 5(DE)**

ACTORUM AG

## Description

L'invention concerne le graissage centralisé dans les installations actionnées par air comprimé, notamment sur les poids lourds.

Ces installations comprennent, généralement, une ligne simple de graissage, mise périodiquement sous pression avec décompression à chaque fin de cycle. Elles comprennent, pour cela, une pompe à lubrifiant fonctionnant en multiplicateur de pression et alimentée en air comprimé par une électrovanne, elle-même commandée électriquement par une temporisation, généralement électronique.(= EP-A 0 247 398). Au bout de chaque période représentant un certain temps d'utilisation, par exemple une heure, commence un cycle de graissage produisant une mise en pression durant le temps nécessaire au graissage, suivie d'une décompression. Une installation de ce type connue par le brevet US-A 2 498 407 comprend en outre un clapet de décharge piloté par la pression d'air comprimé monté en dérivation sur la ligne de graissage au départ de la pompe. La pompe est cependant de structure relativement complexe.

Il est également connu d'utiliser une pompe à lubrifiant à un seul coup, de construction plus simple.

Sur certains véhicules une telle alimentation ne suffit pas, soit par suite du nombre élevé de points à graisser, soit par suite de l'élasticité procurée par les canalisations souples de connexion ou l'introduction d'air dans ces canalisations avec difficulté de purger.

Le but de l'invention est d'éviter les inconvénients précédents, en prévoyant une réserve de débit suffisante sans avoir à modifier ni augmenter le volume de la pompe.

Pour cela, l'alimentation selon l'invention comporte, associées à une pompe à lubrifiant à un seul coup, deux électrovannes à deux voies et trois orifices montées en série par leur voie à haute pression entre la source d'air comprimé et la pompe à lubrifiant, de manière à commander la conduite d'alimentation en air de la pompe, chaque électrovanne ayant deux positions dans l'une desquelles ladite conduite d'alimentation est reliée à la source d'air comprimé et dans l'autre ladite conduite d'alimentation est reliée à la décharge (atmosphère). Le clapet de décharge est piloté par la pression d'air comprimé prélevée entre les deux électrovannes. La commande de temporisation est agencée pour produire périodiquement selon un cycle long, l'ouverture permanente de la voie à haute pression de l'électrovanne la plus en amont pendant tout le temps du cycle de graissage, et produire alternativement selon un cycle court l'ouverture et la fermeture de la voie à haute pression de l'électrovanne la plus en aval plusieurs fois de suite pendant ce même temps, les deux électrovannes étant ouvertes à la voie de décharge à l'atmosphère à la fin de chaque cycle.

D'autre particularités de l'invention apparaîtront dans la description qui va suivre d'un mode de réalisation pris comme exemple et représenté sur le dessin annexé, sur lequel:

la figure 1 est une vue schématique de l'installation; et

la figure 2 est une coupe axiale du clapet de décharge piloté.

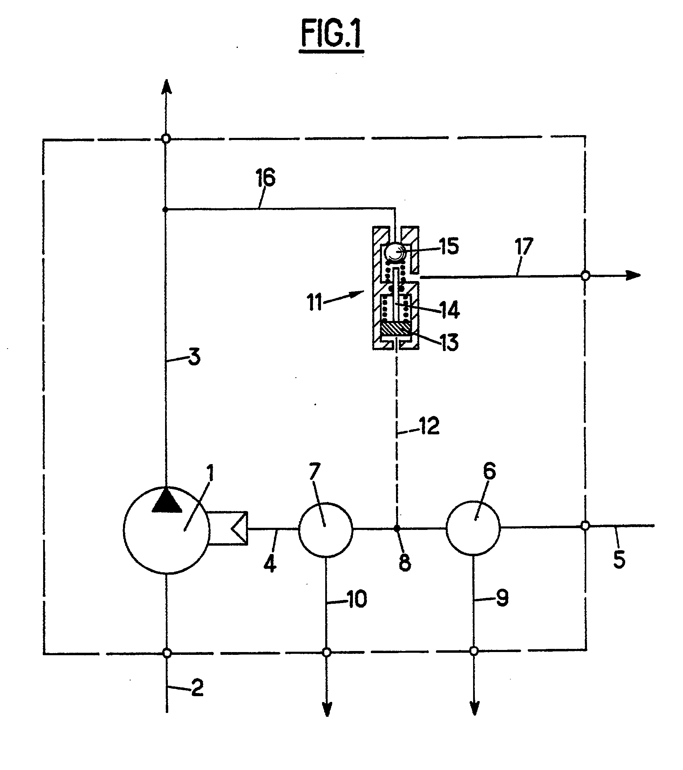

On voit, sur la figure 1, la pompe 1 à un seul coup aspirant le lubrifiant en 2 dans la réserve et le refoulant par 3 vers la ligne de graissage. Cette pompe 1 est d'un type tout à fait habituel et est alimentée par air comprimé par l'arrivée 4.

Conformément à l'invention, cet air comprimé est alimenté en 4, à partir de la source d'air comprimé du véhicule raccordée en 5, par l'intermédiaire de deux électrovannes 6 et 7 qui sont toutes deux du type à deux voies, trois orifices. La vanne 6, par exemple, met en communication sa sortie aval 8 par sa voie à haute pression avec l'alimentation 5 lorsqu'elle est excitée, et en communication par sa voie de décharge avec l'échappement 9 à l'atmosphère lorsqu'elle n'est pas excitée. De la même façon, l'électrovanne 7 met sa sortie aval 4 en communication par sa voie haute pression avec le raccordement amont 8 lorsqu'elle est excitée, et par sa voie de décharge avec l'échappement 10 à l'atmosphère lorsqu'elle n'est pas excitée.

Par ailleurs, les vannes 6 et 7 sont raccordées en série par leur voie à haute pression 5-8 et 8-4, la vanne 6 étant située le plus en amont dans cette voie et la vanne 7 le plus en aval.

Le dispositif se complète par le clapet de décharge piloté par air et désigné dans son ensemble par 11 sur la figure 1. L'air de pilotage arrive par la connexion 12 en provenance du raccordement 8 situé entre les deux vannes 6 et 7, et il agit sur un piston 13, lequel commande par une tige 14 la fermeture d'un clapet 15 constituée par une bille obturant l'arrivée d'une connexion hydraulique 16 raccordée sur la ligne de graissage 3 en aval de la pompe 1. En l'absence de pression d'air de pilotage en 12, ce clapet 15 autorise la décharge du lubrifiant par 17 qui assure le retour à la réserve.

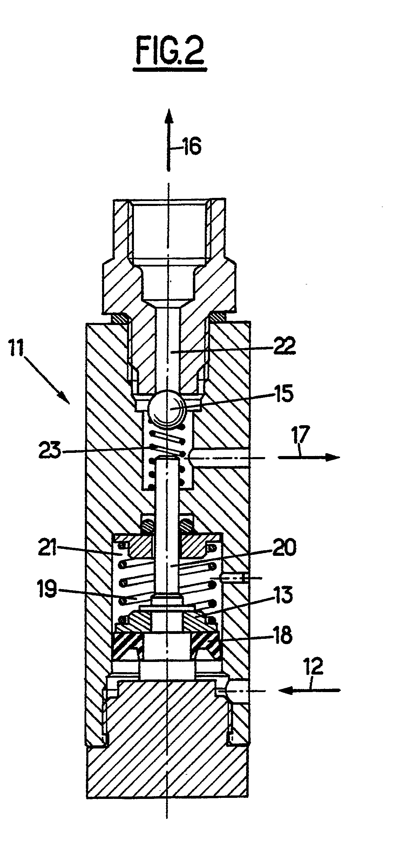

On voit en particulier, sur la figure 2, le détail d'exécution de ce clapet de décharge piloté 11. On y retrouve le clapet 15, les connexions 12, 17 et 16 indiquées précédemment, et le piston 13, avec son joint 18, son ressort de rappel 19 et sa tige 20 qui traverse de manière étanche le fond du cylindre à air 21 pour venir presser la bille 15 sur son siège, obturant l'extrémité du conduit 22 raccordé à la canalisation 16. Il est en outre prévu un léger ressort de rappel 23 pressant directement la bille 15 sur son siège pour permettre la décharge de la pression dans la ligne de graissage tout en empêchant son siphonage éventuel.

Conformément à l'invention, une temporisation à cycle long déclenche périodiquement les cycles de graissage, par exemple toutes les heures. La durée du cycle de graissage peut être fixée, soit par une temporisation de valeur intermédiaire, par exemple une ou plusieurs dizaines de secondes, ou encore par un pressostat de bout de ligne de graissage lorsqu'on utilise des distributeurs-doseurs à fonctionnements successifs. Enfin, une temporisation à cycle court, par exemple de une ou plusieurs secondes, produit alternativement l'excitation et la déséx- citation de l'électrovanne 7 pendant tout le cycle de graissage, c'est-à-dire pendant toute la période de temps pendant laquelle l'électrovanne 6 est elle-même excitée.

Au repos, c'est-à-dire pendant la majeure partie de la durée du cycle long, aucune des vannes n'est excitée, et par conséquent, toutes les pressions d'air en 4 et en 12 sont à l'atmosphère.

Lorsque la temporisation à cycle long déclenche un cycle de graissage, elle produit pendant toute la durée de ce cycle l'alimentation de l'électrovanne 6, de sorte que les canalisations 8 et 12 sont alimentées en air comprimé, fermant ainsi le clapet 15 et alimentant la vanne 7, qui se trouve alternativement excitée puis déséxcitée par la temporisation à cycle court plusieurs fois au cours du cycle de graissage, produisant ainsi plusieurs aller-retour du piston multiplicateur de pression de la pompe 1, dont le débit envoyé dans la ligne de graissage 3 est par conséquent fonction de ce nombre de coups et peut être déterminé à volonté. Naturellement, à la fin de chaque cycle, tout revient dans l'état de repos indiqué plus haut, état dans lequel le clapet de décharge 15 produit par 16 et 17 la décharge de la pression de lubrifiant dans la ligne de graissage 3.

Si la temporisation est électronique, avec comptage binaire sur plusieurs décades à partir d'une base de temps, comme c'est le plus souvent le cas, les temporisations à cycle long et à cycle court, ou même intermédiaire, s'il y a lieu, peuvent être constituées par de simples sorties prélevées sur des décades appropriées.

En outre, par rapport à l'installation habituelle qui nécessite une pompe de dimensions importantes avec son propre dispositif de décompression, l'invention permet d'utiliser une pompe de dimensions plus réduites et d'un type plus simple, avec deux simples clapets d'aspiration et de refoulement sans autre complication, ce qui compense au point de vue coût l'addition de l'électrovanne supplémentaire et du clapet piloté ainsi que la modification électronique.

## Revendications

1. Alimentation pour une ligne (3) de graissage centralisé, cette alimentation comportant une pompe à lubrifiant (1) fonctionnant en multiplicateur de pression et alimentée en air comprimé par une électrovanne (6) elle-même excitée pendant la durée d'un cycle de graissage intervenant périodiquement et commandée par une temporisation appropriée, avec un clapet de décharge (11) monté en dérivation sur la ligne de graissage (3) au départ de la pompe (1) et piloté par la pression d'air comprimé caractérisé par le fait qu'elle comporte, associées à la pompe à lubrifiant (1), celle-ci étant à un seul coup, deux électrovannes (6, 7) à deux voies et trois orifices, montées en série par leur voie à haute pression entre la source (5) d'air comprimé et la pompe (1) de manière à commander la conduite (4) d'alimentation en air comprimé de la pompe, chaque électrovanne ayant deux positions dans l'une desquelles ladite conduite d'alimentation (4) est reliée à la source (5) d'air comprimé et dans l'autre ladite conduite d'alimentation (4) est reliée à la décharge (atmosphère), que la pression d'air de commande du clapet de décharge (11) est prélevée (8) entre les deux électrovannes (6, 7) et que la commande de temporisation est agencée pour produire périodiquement selon un cycle long d'ouverture permanente de la vanne (6) la plus en amont pendant tout le temps du cycle de graissage, et produire alternativement selon un cycle court l'ouverture et la fermeture de l'électrovanne (7) la plus en aval plusieurs fois de suite pendant ce temps, les deux électrovannes (6, 7) étant laissées à la voie de décharge à la fin de chaque cycle.

2. Alimentation selon la revendication 1, caractérisé par le fait que le clapet de décharge piloté (11) comprend un piston (13) actionné par air, avec ressort antagoniste (19), une tige (20) solidaire de ce piston et venant appuyer sur son siège un clapet de décharge (15) non solidaire de cette tige, et un léger ressort de rappel (23) appuyant en permanence le clapet (15) sur son siège.

## Patentansprüche

1. Zufuhreinrichtung für eine Zentralschmierungsleitung (3), wobei diese Zufuhreinrichtung eine Schmiermittelpumpe (1) aufweist, die als Druckverstärker wirkt und über ein Elektroventil (6) mit Druckluft gespeist ist, das seinerseits während der Dauer eines periodisch auftretenden Schmierzyklus erregt und durch einen zweckentsprechenden Zeitgeber gesteuert ist, mit einem Entlastungsventil (11), das parallel zur der Schmiermittelleitung (3) am Auslass der Pumpe (1) angeordnet und das über den Druck der Druckluft gesteuert ist, dadurch gekennzeichnet, dass sie zwei der als Einhubpumpe ausgebildeten Schmiermittelpumpe (1) zugeordnete Zweiwege-Elektroventile (6, 7) mit jeweils drei Anschlüssen aufweist, die mit ihren Hochdruckwegen hintereinanderliegend zwischen der Druckluftquelle (5) und der Pumpe (1) in einer die Druckluftzufuhrleitung (4) der Pumpe steuernden Weise angeordnet sind, wobei jedes Elektroventil zwei Stellungen aufweist, von denen in einer die Zufuhrleitung (4) mit der Druckluftquelle (5) und in der anderen die Zufuhrleitung (4) mit der Entlüftung (der Atmosphär) verbunden ist, dass der Steuerluftdruck für das Entlastungsventil (11) zwischen den beiden Elektriventilen (6, 7) abgenommen (8) ist und dass die Zeitsteuerung derart ausgebildet ist, dass periodisch jeweils in einem langen Zyklus die dauernde Öffnung des am weitesten stromaufwärts liegenden Ventiles (6) während der ganzen Zeit des Schmierzyklus und während dieser Zeit mit einem jeweils kurzen Zyklus abwechselnd das mehrere Male aufeinanderfolgende Öffnen und Schliessen des am weitesten stromabwärts liegenden Elektroventiles (7) bewirkt werden, wobei die beiden Elektroventile (6, 7) am Ende jedes Zyklus in der Entlüftungsstellung gelassen werden.

2. Zufuhreinrichtung nach Anspruch 1, dadurch gekennzeichnet, dass das gesteuerte Entlastungsventil (11) einen druckluftbetätigten Kolben (13) mit einer entgegenwirkenden Feder (19), einem mit dem Kolben fest verbundenen und ein mit ihm unverbundenes Auslassventilstück (15) auf seinen Sitz zu drückender Stift (20) sowie eine schwache Rückholfeder (23) aufweist, die das Ventilstück (15) ständig auf seinen Sitz drückt.

## Claims

1. Supply for a central lubrication line (3), the supply comprising a lubricant pump (1) operating as a pressure intensifier and supplied with compressed air by a solenoid valve (6) which is itself activated during a periodically-occuring lubrication cycle and is controlled by appropriate timing, having a discharge valve (11) branched off the lubrication line (3) at the outlet of the pump (1) and pilot operated by compressed air pressure, characterised in that the supply comprises two solenoid valves (6, 7) associated with the lubricant pump (1), which is a singlestroke pump, these valves (6, 7) being two-way and having three openings and being mounted in series by way of their high-pressure channel between the source (5) of compressed air and the pump (1) so that they control the pipe (4) feeding compressed air to the pump, each solenoid valve having two positions, in one of which the said feeding pipe (4) is connected to the compressed air source (5), and in the other of which the said feeding pipe (4) is connected to the discharge (to the atmosphere), in that the control air pressure of the discharge valve 11 is tapped off (8) between the two solenoid valves (6, 7), and in that the timing control is arranged for producing periodically, in accordance with a long cycle, the permanent opening of the mors upstream valve (6) for the entire lubrication cycle time, and for alternately producing, in accordance with a short cycle, the opening and closing of the more downstream solenoid valve (7) several times successively during this time, the two solenoid valves (6, 7) having the discharge channel left open at the end of each cycle.

2. Supply according to claim 1, characterised in that the pilot operated discharge valve (11) comprises a piston (13) actuated by air, having a counterspring (19), a rod (20) which is connected to the piston and presses a discharge valve (15), not connected to the rod, against its seat, and a light return spring (23) pressing the valve (15) permanently against its seat.

# FIG.1

# FIG.2